# EUROPEAN PATENT APPLICATION

(11) **EP 1 057 757 A1**
(43) Date of publication of application: **06.12.2000**
(21) Application number: 00304301.5
(22) Date of filing: 22.05.2000
(51) Int. Cl.: B65G 47/52, B07C 5/36

(54) **Ejector**

(30) Priority: 26.05.1999 GB 9912335
(71) Applicant: RADIX SYSTEMS LIMITED, Romsey, Hampshire SO51 9AQ (GB)
(72) Inventor: Fuchs, Milan, Winchester SO22 5JQ (GB)
(74) Representative: Howe, Steven

(57) **Abstract**

System for removing products (6) from a support (3; 31,32), especially for removing products identified as being defective. The products (6) are ejected by a fluid jet passing through the support (3; 31,32), and are collected by a collector (5). In one example, the support (3) is porous, allowing the fluid jet to pass through. In another example, the support includes end-to-end conveyors (31,32) spaced to allow fluid to jet between them.

## Description

In process lines, for example production lines for the production of food such as biscuits, beefburgers and breakfast cereals, it is usual to include an inspection system to determine whether each product is acceptable, and to reject any products that are determined not to be acceptable.

Typically, an inspection system illuminates the products with light, either of a particular wavelength dependent upon the irregularity to be detected or broadband light, and a camera to obtain an image of the product. The image is then compared with a predetermined image or parameters corresponding to an acceptable product. If the image of the actual product corresponds to the predetermined acceptable image or falls within the predetermined range of acceptable parameters, the product will be determined to be acceptable. If the difference between the actual image and the acceptable image or parameters exceeds a predetermined level, the product will be determined unacceptable, and will be rejected.

Known rejection systems include a gripper, scraper, trap door or flipper to physically remove the product.

In many production lines, especially those for food products, an oven or freezer tunnel is provided. In this case, the inspection system may be provided in the production line to detect burnt or misshapen products, or multiple products that are frozen or otherwise joined together. The oven or freezer tunnel is normally very long, typically up to 100 m in length. A conveyor extends through the tunnel, extending out of the tunnel by a short length, for example about 2 m, at the discharge end. Products are aligned on the conveyor at the inlet end of the tunnel and pass through the tunnel for processing. The products leave the tunnel in the same ordered manner on the conveyor, from where they are transferred to a further conveyor for downstream processing. In this transfer, the alignment or ordering of the products may be lost.

The processing of the product prior to or in the tunnel may result in defects to the product, and it is desirable to identify and remove these defective products. These defects may include burning of products, misshapen products, or freezing of multiple products together. However, when the products are transferred to downstream conveyors and their order is lost, the defective products occur at random positions.

Ideally, the products would be inspected and defective products removed as they leave the tunnel where the products are arranged in an ordered manner. However, due to the extremes of temperature of the product leaving an oven or freezer tunnel, and due to the short length of the conveyor extending from the tunnel, conventional inspection and rejection systems are not able to inspect and reject product as it leaves the tunnel. Accordingly, inspection and rejection systems are usually provided downstream of the tunnel. This has the disadvantage that steps must be taken to realign the products for ease of inspection and removal of selected products.

According to the present invention, a system for removing a product from a product support comprises a means for jetting fluid through the support to separate a selected product from the support, and a collector provided to receive the product separated from the support by the jet of fluid.

By jetting fluid through the support, which is porous or permeable to allow the fluid to pass through, the product to be removed is lifted from the support and is projected into a collector provided above the support. This allows the product to be removed swiftly and accurately from the support. The system is also able to operate efficiently at extremes of temperature, and occupies a small space. Therefore, the system can be used to remove selected products as they leave a primary processing unit, such as an oven or a freezer tunnel of a food production or processing line.

In a preferred example, the support is in the form of a mesh, more preferably a wire mesh, or is formed of a porous material.

The support is preferably a conveyor on which the products are conveyed. The conveyor may be an endless belt conveyor.

The fluid jetting means are advantageously provided across the width of the support or conveyor in a direction generally normal to the direction in which the products are conveyed by the conveyor. This allows product to be removed across the width of the conveyor as the product passes over the jetting means.

Advantageously, the jetting means is able to jet fluid at a number of different positions across the support to remove the desired product from any location across the support. This is especially advantageous where the system is used to remove selected products that are arranged in a plurality of rows. In this case, it is preferred that the jetting means includes a number of ejectors placed at intervals across the support. This allows the fluid to be ejected from one or more ejectors to selectively remove a product at any desired position across the width of the support. Depending on the size, location and mass of the product to be removed, fluid may be ejected from a different number of ejectors to remove a product. Typically, about 64 ejectors are provided. These may be spaced by at least 10mm, for example by 20mm. This is especially suitable where the product has a width of around 40 to 50mm, since this spacing allows the jet to be acceptably close to the centre of the product to be removed. In some other cases, a single ejector may be provided under each lane of product. In this case, there may be 16 ejectors corresponding to 16 lanes of product, each spaced by around 75mm.

Preferably the jet of fluid is aimed at the centre of the product to be removed from the support. Where multiple jets of fluid are used to lift the product, these are preferably directed across the product. This ensures that the product is lifted cleanly above the support, rather than merely turning the product over as may be the case if the jet of fluid strikes one side of the product. Where fluid is ejected from a number of ejectors to lift the product, the fluid will be ejected at different positions across the product.

It is advantageous that the jet of fluid is in the form of a short blast of fluid. This quickly removes the product from the support.

The fluid used to separate the product from the support is preferably gas, and more preferably air. This is preferable as it does not affect, for example wet, the product.

The collector is preferably in the form of a conveyor, for example a belt or vibratory conveyor. This allows the product to be conveyed from the ejection point for subsequent processing. Where the product support is a conveyor, the collector conveyor advantageously travels in a direction generally normal to that of the product conveyor. This minimises the space needed for the collector. Where the system is a rejection system, the product rejected may be discharged to a defect receptacle.

Preferably, the removal system includes an identification system for identifying products that are to be removed. The identification system preferably includes a light source for illuminating the product, and a detector for obtaining an image of the illuminated product. The light source may be a high frequency fluorescent lamp, light emitting diodes, laser or tungsten halogen lights. The detector preferably comprises one or more line scan cameras. The use of multiple cameras allows products across a wider support to be identified. The identification system preferably also includes a processor in which the determined image is compared to a predetermined image of an acceptable product, or to parameters determined for an acceptable product, to determine whether the product is to be removed from the support. The processor determines also the location of a product to be removed, and can control the jet or jets of fluid, for example by ejecting fluid from selected ejectors, to remove a particular product at this location.

In one example, the image of the product is determined at a particular frequency or narrow band of frequencies. This allows more accurate detection of features that may be difficult to determine over a broader range of frequencies. The determination of an image at a particular frequency or over a narrow band of frequencies may be achieved by illuminating the product with light only of the particular frequency or range of frequencies, or by making the detector sensitive to light only of the particular frequency or range of frequencies.

Two examples according to the present invention will be described with respect to the accompanying drawings, in which:

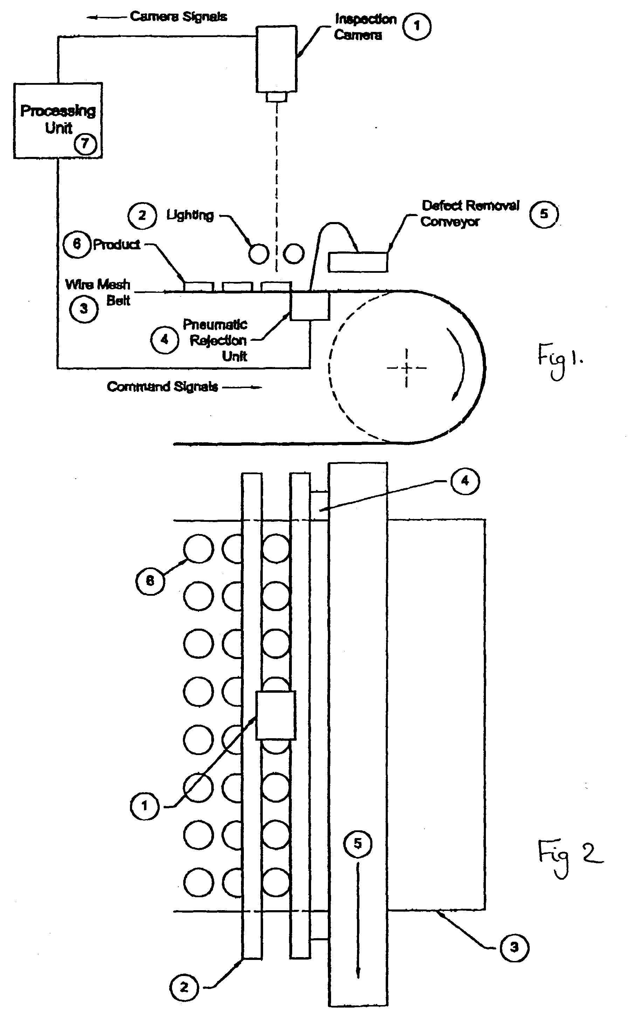

Figure 1 shows a schematic view of part of a processing line;
Figure 2 shows a plan view of part of the line of Figure 1; and,
Figure 3 shows an alternative ejection arrangement.

During manufacture of product 6, such as biscuits, the products 6 are formed and carefully placed in a well-defined pattern onto a belt conveyor 3 formed of wire mesh which conveys the products 6 through a processing unit. After the transition of product through a primary processing unit, e.g. an oven or freezer tunnel, the product 6 emerges. It is still organised in a well-defined pattern and moves at generally constant speed. An inspection camera 1 is placed over the wire mesh belt conveyor 3, typically to scan the full width, say 1 m, of the conveyor 3. The product 6 is illuminated by means of linear or area lighting 2. These are typically high frequency fluorescent lamps, although other means of illumination, e.g. LEDs, lasers, tungsten halogen lights or structured lighting may also be used. The inspection camera 1, typically a line scan solid state camera, views the product 6 in the whole visible spectrum (monochromatic or colour) or only at a particular frequency within or outside the visible spectrum, depending on the defect to be identified. Infrared inspection may be of interest for some applications. A multiplicity of cameras may be employed to increase resolution or enable scanning of wider conveyors. Alternatively, an area scan camera may be used, typically to enable height measurements on 3D inspections. Signals from inspection camera 1 are fed to a processing unit 7 where a decision on the product 6 can be made. If the product 6 is found to be outside defined parameters in terms of colour, size, shape, consistency or other physical or chemical property, it needs to be removed from the product stream. In this case, the lateral position of the defective product is determined and is sent to the rejection unit 4. The inspection system may be cooled, heated or insulated to ensure that this operates correctly at the extremes of temperature associated with the product at the point where it is inspected.

A pneumatic rejection unit 4 is provided beneath the wire mesh belt conveyor 3. The rejection unit 4 consists of a multitude, typically 64, of pneumatic ejectors. The ejectors are each angled in such a way as to lift and propel the product 6 from the belt 3 onto a defect removal conveyor 5. The processing unit 7 decides where the defective product is relative to the width of the wire mesh belt conveyor 3 and energises one or more ejectors to jet, for a short period of time, a blast of air, typically in the centre of the product. As the wire mesh belt 3 is porous, the air can flow through the belt and remove the product 6, typically without affecting adjacent product.

The number of pneumatic ejectors within the pneumatic ejection unit will depend on the type, method and orientation of the product 6. For randomly arranged products, ejectors placed at say 10mm intervals will energise an ejector very close to the centre of the object that may be 40mm in diameter. For larger objects that are always presented in the same place, fewer ejectors, each in the centre of a product lane, will be adequate.

The defect removal conveyor 5 can be a traditional belt or vibratory conveyor but needs to be specifically designed to withstand the environmental conditions present on discharge from an oven or from a freezer tunnel. Once the defective product has been placed onto the defect removal conveyor 5, it will be carried to the side in the main production line and allowed to be collected in a defect receptacle.

With many systems, defective products may occur consistently at the same lateral position. For example, products may be misshapen due to a faulty cutter, and so all products in the lateral position corresponding to that cutter will be consistently defective. Products passing through the oven near the side may consistently be burnt. The present system allows products in these particular locations to be removed in a short conveyor distance, and for the other acceptable products to proceed to downstream processing units.

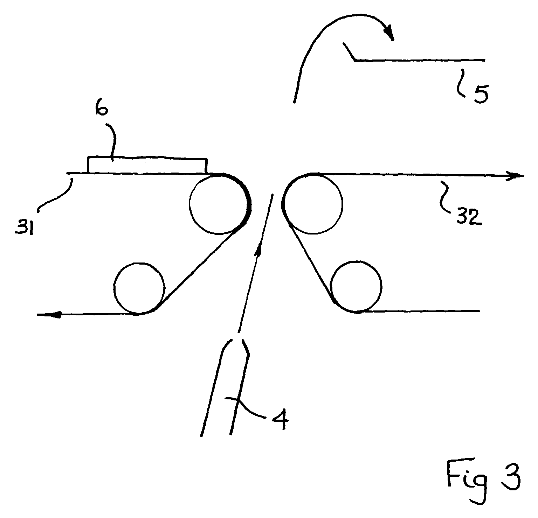

An alternative example according to the present invention is shown in Figure 3. In this case, a first conveyor 31 conveys product 6, for example through an oven or freezer. The product 6 is inspected on the conveyor 31 as described above. A second conveyor 32 is provided downstream of the first conveyor 31. The gap between the first and second conveyor is such that product 6 can pass smoothly from the first conveyor 31 onto the second conveyor 32. A pneumatic rejection unit including a fluid jet nozzle 4 is positioned between the conveyors 31,32. Where a product 6 is to be ejected, a jet of fluid is produced from the nozzle 4 to strike the underside of the product 6 as this passes from the first conveyor 31 to the second conveyor 32, ejecting the product 6 into the defect removal conveyor or collector 5. With this example, fluid does not need to pass through the conveyor itself, and so the conveyor does not itself need to be porous. This also allows the ejection system to be added to existing apparatus at the end of a conveyor, without needing to replace the conveyor belt with a wire mesh or similar belt.

## Claims

1. A system for removing a product (6) from a product support (3; 31,32) comprises a means (4) for jetting fluid through the support (3; 31,32) to separate a selected product (6) from the support (3; 31,32), and a collector (5) provided to receive the product (6) separated from the support (3; 31,32) by the jet of fluid.

2. A system according to claim 1, in which the support (3) is in the form of a mesh, more preferably a wire mesh.

3. A system according to claim 1 or 2, in which the support (3; 31,32) is a conveyor on which the products (6) are conveyed.

4. A system according to claim 3, in which the fluid jetting means (4) are provided across the width of the conveyor (3; 31,32) in a direction generally normal to the direction in which the products (6) are conveyed by the conveyor (3; 31,32).

5. A system according to claim 3 or 4, in which the support comprises two end-to-end belt conveyors (31,32), and in which the jet of fluid passes between the conveyors (31,32).

6. A system according to any one of the preceding claims, in which the jet of fluid is in the form of a short blast of fluid.

7. A system according to any one of the preceding claims, in which the fluid is gas, preferably air.

8. A system according to any one of the preceding claims, in which the jetting means (4) is able to jet fluid at a number of different positions across the support (3; 31,32) to remove the desired product at any location across the support (3; 31,32).

9. A system according to any one of the preceding claims, further including an identification system (1) for identifying products (6) that are to be removed.

10. A processing line including a system according to any one of the preceding claims.

11. A processing line according to claim 10, in which the system for removing product is provided immediately downstream of a processing unit.

12. A processing line including a primary processing unit such as an oven or freezer tunnel, a conveyor (3; 31,32) for conveying product (6) through the primary processing unit, and a system (1) for inspecting product (6) on the conveyor and removing selected products (6) from the conveyor (3; 31,32) which are determined not to meet predetermined criteria.

13. A processing line according to claim 12, in which the system for removing products from the conveyor (3; 31,32) comprises the system according to any one of claims 1 to 12.
